Europäisches Patentamt

European Patent Office

Office européen des brevets

(11) Numéro de publication : **0 119 889**
**B1**

(12) **FASCICULE DE BREVET EUROPÉEN**

(45) Date de publication du fascicule du brevet :
**19.08.87**

(21) Numéro de dépôt : **84400330.1**

(22) Date de dépôt : **17.02.84**

(51) Int. Cl.⁴ : **H 04 B  7/26, H 04 M  1/54**

(54) **Procédé et dispositif de codage dynamique pour l'identification d'appareils de transmission à distance.**

(30) Priorité : **21.02.83 FR 8302743**

(43) Date de publication de la demande :
**26.09.84 Bulletin 84/39**

(45) Mention de la délivrance du brevet :
**19.08.87 Bulletin 87/34**

(84) Etats contractants désignés :
**AT BE CH DE FR GB IT LI NL SE**

(56) Documents cités :
**FR-A- 2 269 263**
**LU-A-    81 654**
**US-A- 3 761 683**
**US-A- 3 911 397**

(73) Titulaire : **SOCIETE D'ETUDES ET DE CONSTRUC-
TIONS ELECTRONIQUES Société Anonyme:
214, rue du Faubourg Saint-Martin
F-75483 Paris Cedex 10 (FR)**

(72) Inventeur : **Petit, Jean-Pierre
1, rue du Clos du Pileu
F-91120 Palaiseau (FR)**

(74) Mandataire : **Lejet, Christian
Société JEUMONT-SCHNEIDER 31-32, Quai de Dion
Bouton
F-92811 Puteaux Cedex (FR)**

Jouve, 18, rue St-Denis, 75001 Paris, France

### Description

La présente invention concerne un procédé et un dispositif de codage dynamique pour identification d'appareils de transmission à distance, destiné notamment à attribuer un code d'identification à un poste fixe, relié au réseau téléphonique, et à un poste mobile agencé pour communiquer par voie hertzienne avec le poste fixe, ayant ainsi accès au réseau téléphonique.

On connaît déjà des appareils de transmission de ce type, dans lesquels, le plus souvent, les signaux d'information (sonnerie, tonalité, ...) et la bande à basse fréquence destinée à véhiculer la parole sont eux-mêmes véhiculés par la modulation conventionnelle de signaux haute fréquence. Cependant cette solution présente un inconvénient majeur ; en effet il est tout à fait possible pour l'utilisateur d'un poste mobile voisin, en connaissant lesdites fréquences de transmission et en s'ajustant sur celles-ci, d'entrer en communication avec le poste fixe auquel correspondent ces fréquences, et ce de façon indésirable, pour ainsi avoir accès au réseau téléphonique et pouvoir communiquer gratuitement avec l'abonné de son choix.

On connaît un moyen pour pallier cet inconvénient, moyen qui consiste à attribuer au poste fixe et au poste mobile un code, par exemple un code sous forme binaire stocké dans des mémoires prévues dans le poste fixe et dans le poste mobile à cet effet, la mise en communication des deux postes ne pouvant être réalisée que lorsque l'échange des codes, par voie hertzienne, a été effectué et qu'une logique de comparaison interne au poste fixe a vérifié l'identité des deux codes. Ainsi l'appairage correct du poste mobile et du poste fixe qui lui correspond est garanti et tout poste mobile tiers verra ses demandes de mise en communication refusées.

Ainsi, le brevet FR-A-2 269 263 décrit un procédé pour l'identification d'un poste d'abonné d'un réseau de stations radio-électriques. A chaque poste d'abonné est associé une identité particulière. Elle est émise vers un poste récepteur en vue de sa vérification, afin d'établir ou non la communication entre les deux postes.

La caractéristique de ce procédé est que l'identité émise par un poste d'abonné en vue de sa vérification est formée, par un code inconnu de l'abonné, à partir du numéro d'appel du poste d'abonné. L'identité ainsi formée est déchiffrée dans le poste récepteur et renvoyée en tant qu'identité retour, c'est-à-dire numéro d'appel, au poste d'abonné.

Dans le cas d'une identité manipulée, c'est-à-dire d'une identité formée sans utilisation du code inconnu de l'abonné, l'identité retour ne correspond pas au numéro d'appel du poste d'abonné, et la communication n'est pas établie.

Il s'agit donc d'un procédé de codification à l'abri des manipulations, cette codification n'étant effectuée qu'une seule fois pour tout le réseau d'appel.

De même, le brevet US-3 911 397 est relatif à un procédé d'identification d'appareils de transmission à distance. Selon ce procédé, la valeur d'un code, déterminée une fois pour toutes, est stockée dans un premier dispositif qui contrôle l'accès à un système protégé.

Un second dispositif reçoit un code d'une station éloignée, la valeur de ce code est comparée à celle qui est stockée dans le premier dispositif. Si les valeurs sont identiques, le premier dispositif autorise l'accès au système protégé. Sinon, le second système reçoit un autre code de la station, les mêmes opérations étant alors répétées.

Ce procédé ne prévoit pas le remplacement périodique des valeurs de code prévus dans deux appareils destinés à communiquer par voie hertzienne.

Cependant ces procédés présentent à leur tour un inconvénient majeur : ils impliquent, lors de la fabrication, le stockage dans la mémoire interne à chaque poste fixe et mobile d'un numéro de code qui leur est propre, alors que l'on conçoit qu'il serait beaucoup plus avantageux de disposer en fin de fabrication de postes banalisés pouvant ultérieurement être appairés.

Un autre inconvénient des systèmes mettant en œuvre ce type de procédé, réside dans le fait que, le numéro de code étant généralement stocké dans le poste au moyen de commutateurs manuels conventionnels, l'utilisateur, en accédant à ces commutateurs, peut modifier le code de son poste mobile. Cela peut être gênant soit dans le cas où ledit utilisateur a détecté et décodé, en s'ajustant sur les fréquences d'une paire fixe-poste mobile voisine, le numéro de code de ladite paire pour le reproduire dans la mémoire de son propre poste et se permettre, de façon indésirable, l'accès audit poste fixe voisin, et donc au réseau téléphonique, soit dans le cas d'une manipulation accidentelle. Le numéro de code d'un poste mobile, une fois modifié, ne permet plus l'accès au poste fixe qui lui correspond et rend toute liaison avec le réseau impossible dans le cas d'une utilisation normale.

La présente invention vise à pallier ces inconvénients et à proposer un procédé et un dispositif de codage du type mentionné ci-dessus qui soit à la fois un peu coûteux et tout à fait inviolable.

A cet effet, la présente invention concerne un procédé de codage pour l'identification d'appareils de transmission à distance dans lequel on stocke une première valeur de code dans des mémoires prévues dans au moins deux appareils de transmission destinés à communiquer ensemble par voie hertzienne, la communication entre les appareils n'étant autorisée que lorsque l'identité desdites premières valeurs de code a été vérifiée, après leur échange par voie hertzienne, par des moyens de vérification prévus dans au moins l'un desdits appareils à cet effet, caractérisé par le fait que l'on remplace périodiquement lesdites premières valeurs de code contenue dans lesdites mémoires par une seconde valeur de code, après que l'on ait établi un contact électrique entre les circuits desdits appareils.

Un autre objet de l'invention est de proposer un dispositif destiné à mettre en œuvre le procédé mentionné ci-dessus, du type concernant deux appareils agencés pour communiquer entre eux par voie hertzienne, chacun des deux appareils comportant une mémoire dans laquelle est stockée une première valeur de code, et au moins un des deux appareils comportant des moyens de vérification de l'identité desdites valeurs de code, afin d'autoriser ou non la communication entre les deux appareils, caractérisé par le fait que sont prévus des moyens pour établir un contact électrique entre les deux appareils, des moyens pour vérifier que ledit contact est établi, et, dans au moins l'un desdits appareils, des moyens pour remplacer périodiquement dans lesdites mémoires des deux appareils la première valeur de code par une seconde valeur de code.

De façon préférée, les valeurs de code sont établies de façon aléatoire par des moyens prévus dans au moins l'un des appareils de transmission, et en particulier la seconde valeur de code est obtenue par transformation aléatoire de la première valeur de code.

L'invention s'applique tout particulièrement au cas d'un poste, ou appareil fixe, raccordé à un réseau téléphonique, et d'un poste mobile agencé pour communiquer par voie hertzienne avec le poste fixe, et par là avec ledit réseau téléphonique, la signalisation (numérotation, tonalité, sonnerie, ...) et la parole étant transmises par la modulation d'un signal à haute fréquence.

Il est avantageux que la transformation aléatoire mentionnée ci-dessus soit obtenue à partir des numéros d'appel composés par l'utilisateur du poste mobile lors des communications établies avec les abonnés du réseau.

De façon préférée les valeurs de code sont représentées sous la forme d'une succession de valeurs binaires. Ainsi, le procédé selon la présente invention peut être mis en œuvre au moyen d'un dispositif de type numérique, faisant par exemple appel à un ou plusieurs microprocesseurs.

En outre, il est avantageux que, dans le cas où l'énergie électrique alimentant le poste mobile est fournie par des accumulateurs destinés à être rechargés par un enfichage périodique approprié dudit poste mobile sur le poste fixe, ledit contact électrique soit établi par des plots conducteurs adjacents aux plots de recharge des accumulateurs, permettant la circulation entre les deux postes des informations inhérentes audit changement de code.

Il est également possible, lorsque lesdites informations sont véhiculées par des signaux alternatifs, de réaliser un multiplexage entre le signal électrique continu de recharge et lesdits signaux alternatifs, la nécessité de prévoir des plots supplémentaires d'échange d'informations étant alors avantageusement supprimée.

Enfin, et ce de façon à réaliser entre les deux postes une liaison à faible taux d'erreur faisant appel à des moyens simples et peu coûteux, il est particulièrement avantageux que la liaison entre les deux postes inhérents au changement de code soit effectuée de façon asynchrone, par exemple sous forme de mots de trois binons comportant un binon de départ, un binon de code et un binon de fin de mot.

On indiquera pour finir, à titre indicatif, que les valeurs de code pourront avoir une longueur de 20 binons, le code pouvant alors prendre une valeur parmi un million.

La présente invention sera mieux comprise à la lecture de la description suivante d'une forme de réalisation préférée du dispositif permettant la mise en œuvre du procédé selon l'invention, faite en référence aux dessins annexés, sur lesquels :

La figure 1   représente un diagramme schématique du dispositif selon l'invention, intégré à un poste fixe relié à un réseau téléphonique et à un poste mobile,

La figure 2   représente un schéma-bloc de la partie du dispositif intégrée au poste fixe, et

La figure 3   représente la partie du dispositif intégrée au poste mobile.

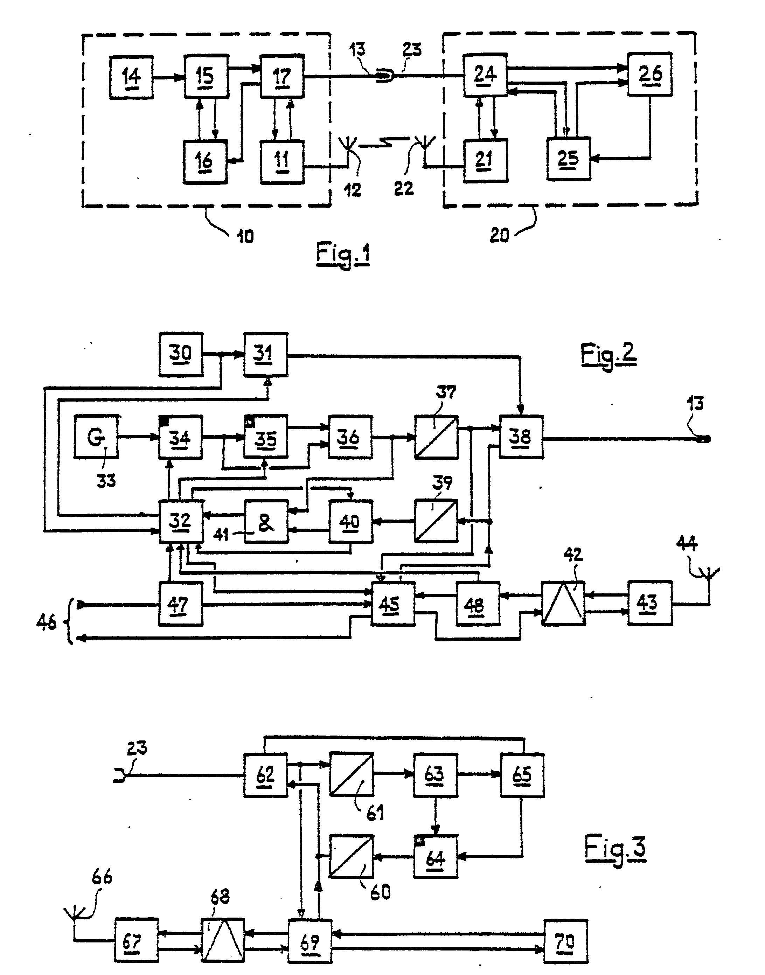

Sur la Figure 1 sont schématiquement représentées l'enceinte d'un poste fixe 10, relié à un réseau téléphonique, et l'enceinte d'un poste mobile 20.

Le poste fixe et le poste mobile, par la suite appelés « fixe » et « mobile » respectivement, sont destinés à communiquer entre eux au moyen d'une liaison hertzienne bidirectionnelle simultanée, c'est-à-dire que la communication peut se faire simultanément dans le sens fixe-mobile et dans le sens mobile-fixe.

A cet effet sont prévus, dans le fixe et dans le mobile, des moyens de modulation-démodulation et d'émission-réception de deux porteuses à haute fréquence, respectivement 11 et 21, associés à leur antenne respective 12, 22. Le fixe et le mobile peuvent également être reliés au moyen d'au moins deux plots conducteurs 13, 23, disposés sur les boîtiers respectifs du fixe et du mobile, et agencés pour entrer en contact électrique l'un avec l'autre lorsque le mobile est reposé sur le fixe pour permettre la recharge de ses accumulateurs. Les plots 13, 23 sont avantageusement disposés au voisinage des plots de recharge des accumulateurs du mobile (non représentés).

La liaison électrique établie entre le fixe et le mobile lorsque leurs plots respectifs 13 et 23 viennent en contact permet un échange d'informations numériques entre le fixe et le mobile.

Schématiquement et toujours en référence à la Figure 1, on trouve dans l'enceinte du poste fixe 10 un générateur de code aléatoire 14 dont la sortie est reliée à une mémoire 15. Une unité de commande 16 est également prévue pour vérifier l'identité des codes respectifs du mobile et du fixe, soit lors de la recharge des accumulateurs, soit avant l'établissement d'une communication avec le réseau, puis pour éventuellement modifier les valeurs de code du fixe et du mobile. Enfin, est prévue, globalement indiquée par le repère 17, une unité de codage-décodage, modulation et commutation destinée à permettre le dialogue entre le fixe et le mobile, soit par les plots 13, 23, soit par voie hertzienne.

Le poste mobile 20 comprend quant à lui une unité 24 de codage-décodage, modulation et commutation du même type que l'unité 17 du poste fixe, une mémoire 25 et une unité de commande 26 destinée à charger dans la mémoire 25 une nouvelle valeur de code reçue du poste fixe et/ou envoyer au poste fixe le contenu de la mémoire 25.

Le fonctionnement schématique du dispositif selon la présente invention est le suivant : le poste fixe 10 émet en permanence, sur son plot 13, la valeur supposée du code du poste mobile auquel il est associé. Lorsque le poste mobile vient en recharge sur le poste fixe, celui-ci reçoit de la part du poste mobile lors de la réception par celui-ci de ladite valeur de code un signal attestant que le poste fixe et le poste mobile sont effectivement en contact électrique. Ce signal peut être par exemple un signal de code d'un contenu quelconque ; en effet si le poste mobile est à cet instant totalement déchargé, et que, vraisemblablement, le contenu de sa mémoire est perdu, alors l'appairage ne peut plus être vérifié, mais il doit pouvoir être effectué à nouveau par une procédure de changement de code. Alors l'unité de commande 16 prend en charge le remplacement des valeurs de code, éventuellement différentes, situées dans les mémoires 15 et 25 par une nouvelle valeur de code fournie par le générateur de code 14.

Le dispositif schématiquement décrit ci-dessus permet également la vérification de l'identité des codes avant l'établissement d'une communication par voie hertzienne entre le poste mobile et le réseau téléphonique, via le poste fixe.

Sur la figure 2 est représenté un schéma-bloc plus détaillé de la partie du dispositif intégrée au poste fixe 10. On y trouve une horloge 30 dont la sortie est reliée d'une part à l'entrée d'un séquenceur 31 destiné à assurer l'enchaînement cohérent des diverses étapes du procédé, et d'autre part à une unité de commande 32 dont on verra plus loin le fonctionnement détaillé. On trouve en outre un générateur de code aléatoire 33 dont la sortie est reliée à l'entrée d'une mémoire tampon 34. La sortie de la mémoire tampon 34 est reliée à une unité de mémoire vive 35. Les sorties respectives de la mémoire tampon 34 et de la mémoire vive 35 sont reliées aux deux entrées d'un sélecteur 36 dont la sortie est reliée à l'entrée d'un codeur 37. La sortie du codeur 37 est reliée à l'entrée d'un sélecteur 38 du sens de la transmission sur le plot 13. La broche de sortie du sélecteur 38 est reliée à un décodeur 39 destiné à décoder les signaux reçus sur le plot 13.

La sortie du décodeur 39 est reliée à l'entrée d'une unité 40 de validation des signaux reçus et de comptage. La sortie de code de l'unité 40 est reliée à l'une des entrées d'un comparateur 41. L'autre entrée du comparateur 41 est reliée à la sortie du sélecteur 36. L'unité 40 comporte une seconde sortie reliée à une entrée de l'unité de commande 32, destinée à véhiculer des signaux de contrôle. La sortie du comparateur 41 est reliée à une entrée de l'unité de commande 32. On trouve en outre un modulateur-démodulateur 42, assurant une liaison bidirectionnelle simultanée, via un émetteur-récepteur 43 et une antenne 44, avec un autre émetteur-récepteur ajusté sur la même fréquence et prévu dans le poste mobile que l'on décrira plus loin.

L'entrée et la sortie du modulateur-démodulateur 42 sont reliées à une unité de commutation 45 qui permet d'aiguiller vers l'émission-réception soit les entrées et sorties de signaux de code, soit le réseau téléphonique représenté en 46, via un interfaçage approprié qui consiste en une interface d'entrée 47 située entre l'entrée du réseau et l'unité de commutation 45, et une interface de sortie 48 située entre le modulateur-démodulateur 42 et l'unité de commutation 45. L'interface de sortie comporte une première sortie auxiliaire reliée à une entrée du générateur de code 33, et une seconde sortie auxiliaire reliée à une entrée de l'unité de commande 32.

L'interface d'entrée 47 comporte une sortie auxiliaire reliée à une entrée de l'unité de commande 32.

Ladite unité de commande 32, à partir des signaux d'information fournis par l'interface d'entrée 47, l'interface de sortie 48, l'unité de validation et de comptage 40 et le comparateur 41, élabore plusieurs signaux de commande destinés au séquenceur 31, pour sa remise à zéro, aux mémoires 34 et 35, à l'unité de validation et de comptage 40, également pour la remise à zéro du comptage, et à l'unité de commutation 45.

Indiquons enfin que le séquenceur 31 comporte deux sorties, l'une destinée à assurer la commutation en émission ou en réception du sélecteur 38, l'autre étant reliée à l'unité de commande 32.

Le fonctionnement de cette première partie du dispositif est le suivant : à un instant initial, noté $t_0$, le séquenceur 31, au début de son cycle, fait passer le sélecteur 38 en mode émission et le sélecteur 36, commandé par l'unité de commande 32, fournit en sortie, vers le codeur 37, le numéro de code contenu dans la mémoire vive 35.

Le codeur 37 assure deux fonctions : d'une part il crée, à partir de la valeur de code stockée dans la mémoire 35 sous forme d'une succession de N binons, par exemple 20 binons, N mots de trois binons, chaque mot comportant un binon de début de mot, un binon de code, et un binon de fin de mot ; d'autre part il opère sur lesdits mots de trois binons une conversion ou modulation telle qu'à un niveau logique haut correspond une succession d'un certain nombre de périodes d'un signal alternatif d'une fréquence de l'ordre de 2 kHz, et qu'à un niveau logique bas ne correspond aucun signal. On dispose ainsi, en sortie du codeur 37, d'un signal électrique dont la fréquence est incluse dans la bande passante téléphonique conventionnelle destinée à la transmission de la parole, bande qui s'étend d'environ 300 Hz à environ 2500 Hz. Ainsi l'émission des informations de code par l'onde radio, nécessaire comme on le verra plus loin, est rendue possible. Il faut préciser en outre que ce type de modulation, mettant en œuvre des moyens électroniques simples et peu coûteux, permet cependant de garantir un taux d'erreur de transmission raisonnablement faible.

Le signal de code disponible en sortie du codeur 37 est ainsi envoyé sur la ligne, ou plot 13, puisque le sélecteur 38 est, comme on l'a vu, en mode émission.

Une fois que le code a été émis, le séquenceur fait passer le sélecteur 38 en mode réception et le décodeur 39 « écoute » la ligne. Il convient de noter que le décodeur 39 exécute quant à lui les fonctions inverses de celles du codeur, afin de pouvoir reconstituer un numéro de code à N binons éventuellement reçu en ligne.

Dans le cas où, après une temporisation d'une certaine durée, organisée par le séquenceur 31, aucun signal de code n'a été reçu, c'est-à-dire lorsque l'unité de validation et de comptage 40 en sortie du décodeur 39 n'a détecté aucun code en réception, ladite unité 40 transmet à l'unité de commande 32 un signal à la réception duquel un signal de remise à zéro est adressé au séquenceur 31. On retourne ainsi à l'instant initial $t_0$ pour commencer un nouveau cycle. Si par contre le poste fixe reçoit sur son plot 13 un signal, pendant que le décodeur 39 est en « écoute », c'est-à-dire si la liaison électrique entre le plot 13 du poste fixe et le plot 23 du poste mobile est établie et que le mobile, à la réception d'un signal de code envoyé en ligne par le fixe, a renvoyé à celui-ci la valeur de code contenue dans sa mémoire, valeur éventuellement fausse du fait que les accumulateurs du mobile peuvent être entièrement déchargés (l'erreur de valeur n'influence pas la suite du processus), le signal correspondant à cette valeur est alors décodé par le décodeur 39 puis est envoyé dans l'unité 40 qui enregistre dans un compteur une information indiquant qu'une première valeur de code a été reçue. Bien entendu, si l'unité 40 détecte une anomalie dans la réception, elle informe alors l'unité de commande 32 de façon à ce que celle-ci assure la réinitialisation du cycle. Tout se passe en fait comme si aucun signal de code n'avait été reçu.

Ledit changement de code est réalisé de la façon suivante : l'unité de commande 32 fait basculer le sélecteur 36 sur la mémoire tampon 34, qui contient alors la valeur courante du code aléatoire de remplacement ; le séquenceur 31 est alors réinitialisé et le contenu de la mémoire 34 est envoyé en ligne. Indiquons qu'à cet instant, comme on le verra en détail plus loin, le poste mobile charge cette nouvelle valeur de code dans sa mémoire puis renvoie le contenu de ladite mémoire en ligne. Ledit signal est alors reçu par le décodeur 39, validé en 40 et comparé en 41 avec la valeur de code disponible à la sortie du sélecteur 36, c'est-à-dire la valeur de code contenue dans la mémoire 34. Si les deux valeurs de code sont identiques, c'est donc que le changement de code a été correctement effectué et l'unité de commande 32 peut alors figer le contenu de la mémoire tampon 34 dans la mémoire vive 35. Dès que le poste mobile sera écarté du poste fixe, alors l'unité 40, ne détectant aucun signal en réception, occasionne par l'intermédiaire de l'unité de commande 32 une réinitialisation du cycle et l'on se retrouve dans la situation de départ, à ceci près que c'est une nouvelle valeur de code qui est contenue dans les mémoires respectives du mobile et du fixe.

Cependant, si le comparateur 41 démontre une différence entre le nouveau code émis par le fixe et le code reçu du mobile par la suite, c'est qu'un incident a perturbé soit la transmission en ligne, soit le chargement de la nouvelle valeur de code dans la mémoire du mobile. L'unité de commande réinitialise alors le cycle de changement de code, et ce jusqu'à ce que le nouvel appairage soit correct. Si l'unité de commande 32 constate que ce nouvel appairage est impossible à obtenir, par exemple dans le cas où les plots 13 et 23 ont été accidentellement débranchés l'un de l'autre, on conçoit qu'il est toujours possible de revenir à l'état initial, avec l'ancien code, ledit appairage initial n'étant pas « perdu ».

Le compteur prévu dans l'unité 40 fournit à l'unité de commande une information indiquant quel type de cycle est en cours, afin d'éviter des changements de code inopportuns : soit un cycle de vérification de l'appairage précédent, faisant appel à la première valeur de code, soit un cycle de vérification du chargement correct de la nouvelle valeur de code dans le fixe et dans le mobile.

Le générateur de code comporte, comme on l'a vu, une entrée reliée à une sortie de l'interface 48, ainsi qu'une autre entrée reliée à la sortie de la mémoire 35. En effet une méthode pratique et efficace pour fournir à la mémoire 34 un code aléatoire est d'effectuer sur le code en cours de validité une transformation, elle-même fonction des numéros d'abonnés composés par l'utilisateur du poste mobile sur son cadran, facilement détectables par l'interface 48.

On va maintenant décrire la partie du dispositif incluse dans le poste mobile, en référence à la figure 3. On y trouve un codeur 60 et un décodeur 61, sensiblement identiques respectivement au codeur 37 et au décodeur 39 du poste fixe, respectivement reliés à l'entrée et à la sortie d'un sélecteur 62 du sens de transmission sur la ligne, ou plot 23. La sortie du décodeur 61 est reliée à l'entrée d'une unité 63 de validation et de comptage. La sortie de code de l'unité 63 est reliée à l'entrée d'une mémoire vive 64, dont la sortie est reliée à l'entrée du codeur 60. Une sortie de contrôle de l'unité 63 est reliée à une entrée d'une unité de commande 65, qui comporte elle-même une sortie de commande d'écriture de la mémoire 64 et une sortie de commande d'écriture de la mémoire 64 et une sortie de commande vers le sélecteur 62. En outre, sont prévus, de la même manière que sur le poste fixe, des moyens d'émission-réception constitués d'une antenne 66, d'un émetteur-récepteur 67 et d'un modulateur-démodulateur 68, destinés à assurer avec les éléments correspondants du fixe une liaison hertzienne bidirectionnelle simultanée. Une unité de commutation 69, commandée par une troisième sortie de l'unité de commande 65 permet d'aiguiller l'entrée et la sortie du modulateur-démodulateur soit vers les entrées-sorties de code, disponibles respectivement entre le sélecteur 62 et le décodeur 61, et entre le codeur 60 et le sélecteur 62, soit vers une interface 70 permettant à l'utilisateur de demander ou de recevoir des communications avec le réseau, et munie notamment d'un cadran, d'un microphone et d'un haut-parleur.

Le fonctionnement de la partie du dispositif décrite ci-dessus est le suivant : lorsque le mobile est posé sur le fixe, à des fins de recharge de ses accumulateurs, alors les plots 13 et 23 viennent en contact l'un avec l'autre et, comme on l'a vu plus haut, le mobile, alors en mode réception sur la ligne, grâce au sélecteur 62, reçoit un signal de code émis par le fixe. Après la validation et le comptage correspondant à cette première réception, l'unité de commande 65 fait passer le sélecteur 62 en mode émission et le contenu de la mémoire 64 est envoyé en ligne. Comme on l'a vu plus haut, le mobile doit alors recevoir, après s'être replacé en mode réception, un signal correspondant à une nouvelle valeur de code. La validation de ce second code, ainsi que l'information contenue dans le compteur, indiquant que la première vérification de présence a déjà été effectuée, provoque l'envoi vers l'unité de commande d'un signal à la réception duquel ladite unité de commande va mettre en œuvre le chargement de ladite nouvelle valeur de code dans la mémoire 64, puis l'envoi en ligne du contenu de ladite mémoire, ce qui permettra, comme on l'a vu, la vérification par le fixe que cette nouvelle valeur de code a été convenablement mémorisée. En cas d'incident, l'unité de commande 65 fait en sorte qu'aucun signal de code n'est envoyé sur la ligne, ce qui provoque une réinitialisation appropriée des échanges déclenchée par l'unité de commande 32 (Figure 2) du dispositif contenu dans le poste fixe.

Grâce aux unités de commutation respectives, 45 et 69, du fixe et du mobile, le cycle de vérification de l'identité des codes après changement, c'est-à-dire de l'appairage correct des deux postes, est également réalisable par voie hertzienne, lorsque les deux postes sont, en utilisation normale, distants l'un de l'autre, ceci permettant de vérifier l'identité du mobile avant de l'autoriser à communiquer, dans un sens comme dans l'autre. On voit sur la Figure 2 que les interfaces d'émission et de réception, respectivement 48 et 47, fournissent à l'unité de commande 32 des signaux indiquant qu'une mise en relation avec un abonné du réseau est souhaitée, soit lorsque le poste reçoit un appel, soit lorsque l'utilisateur du mobile désire en émettre un.

Bien entendu la présente invention n'est pas limitée à la description ci-dessus mais inclut également toutes les modifications ou mises en forme différentes que réalisera l'Homme de l'Art grâce à ses connaissances normales, si elles sont dans le cadre des revendications ci-après.

**Revendications**

1. Procédé de codage pour l'identification d'appareils de transmission à distance (10, 20), dans lequel on stocke une première valeur de code dans des mémoires (15, 25 et 35, 64) prévues dans au moins deux appareils de transmission destinés à communiquer ensemble par voie hertzienne, la communication entre les appareils n'étant autorisée que lorsque l'identité desdites premières valeurs de code a été vérifiée, après leur échange par voie hertzienne, par des moyens de vérification (16 ; 41) prévus dans au moins l'un desdits appareils (10) à cet effet, caractérisé par le fait que l'on remplace périodiquement lesdites premières valeurs de code contenues dans lesdites mémoires par une seconde valeur de code, après que l'on ait établi un contact électrique (13, 23) entre les circuits desdits appareils.

2. Dispositif destiné à mettre en œuvre le procédé selon la revendication 1, du type concernant deux appareils (10, 20) agencés pour communiquer entre eux par voie hertzienne, chacun des deux appareils comportant une mémoire (15, 25 ; 35, 64) dans laquelle est stockée une première valeur de code, et au moins un des deux appareils comportant des moyens de vérification (16 ; 41) de l'identité desdites valeurs de code, afin d'autoriser ou non la communication entre les deux appareils, caractérisé par le fait que sont prévus des moyens (13, 23) pour établir un contact électrique entre les deux appareils, des moyens pour vérifier que ledit contact est établi (16 ; 40) et, dans au moins l'un desdits appareils, des moyens (14 ; 33, 34) pour remplacer périodiquement dans lesdites mémoires des deux appareils la première valeur de code par une seconde valeur de code.

3. Dispositif selon la revendication 2, caractérisé par le fait qu'il comprend outre des moyens pour établir la seconde valeur de code par transformation aléatoire de la première valeur de code.

4. Dispositif selon la revendication 2, caractérisé par le fait que les moyens de remplacement comprennent un générateur de code aléatoire (14 ; 33) agencé pour fournir la seconde valeur de code.

5. Dispositif selon la revendication 2, dans lequel les deux appareils sont destinés à être périodiquement enfichés l'un dans l'autre à des fins de recharge d'accumulateurs compris dans l'un des deux appareils, caractérisé par le fait que les moyens pour établir le contact électrique comprennent au moins deux plots (13, 23) enfichables l'un dans l'autre lors de ladite recharge.

6. Dispositif selon la revendication 2, caractérisé par le fait que les moyens pour établir le contact électrique consistent en le multiplexage des signaux d'échange de code et des signaux continus de recharge des accumulateurs.

7. Dispositif selon la revendication 2, caractérisé par le fait que, dans le premier appareil (10), les moyens de vérification comprennent une unité de validation (40) du code reçu sur ledit plot (13), un comparateur (41) dont une entrée est reliée à la sortie de la mémoire (25), et l'autre entrée est reliée à la sortie de ladite unité de validation (40), les moyens de vérification de l'établissement du contact comprenant ladite unité de validation (40), et les moyens pour remplacer ladite valeur de code comprennent une mémoire tampon (34) connectée entre la sortie d'un générateur de code (33) et l'entrée de ladite mémoire (35), une unité centrale (32) étant agencée pour organiser les échanges entre ces divers organes, et que, dans le second appareil (20), les moyens pour remplacer ladite valeur de code comprennent une unité de validation (63) dont l'entrée est reliée au plot (23), et dont une première sortie est reliée à l'entrée de ladite mémoire (64), et une seconde sortie est reliée à une entrée d'une unité de commande (65).

## Claims

1. Coding method for the identification of telecommunications apparatus (10, 20), wherein a first code value is stored in memories (15, 25 and 35, 64) provided in at least two transmission apparatus intended to communicate together by radio means, communication between the apparatus being allowed only when the identity of the said first code values has been verified, after their exchange by radio means, by verification means (16 ; 41) which are provided in at least one of the said apparatus (10) for this purpose, characterised in that the said first code values contained in the said memories are periodically replaced by a second code value, after electrical contact (13, 23) has been established between the circuits of the said apparatus.

2. Device for carrying out the method according to claim 1, of the type concerning two apparatus (10, 20) arranged to communicate with one another by radio means, each of the two apparatus comprising a memory (15, 25 ; 35, 64) wherein a first code value is stored, and at least one of the two apparatus comprising means (16 ; 41) for verification of the identity of the said code values, so as to permit or forbid communication between the two apparatus, characterised in that means (13, 23) are provided for establishing electrical contact between the two apparatus, means for verifying that the said contact is established (16 ; 40) and, in at least one of the said apparatus, means (14 ; 33, 34) for periodically replacing in the said memories of the two apparatus the first code value by a second code value.

3. Device according to claim 2, characterised in that it also comprises means for establishing the second code value by random transformation of the first code value.

4. Device according to claim 2, characterised in that the replacement means comprise a random code generator (14 ; 33) adapted to provide the second code value.

5. Device according to claim 2, wherein the two apparatus are intended to be periodically plugged into one another for purposes of recharging batteries comprised in one of the two apparatus, characterised in that the means for establishing electrical contact comprise at least two terminals (13, 23) pluggable into one another at the time of such recharging.

6. Device according to claim 2, characterised in that the means for establishing electrical contact consist in the multiplexing of the code exchange signals and continuous battery-recharging signals.

7. Device according to claim 2, characterised in that in the first apparatus (10) the verification means comprise a unit (40) for validation of the code received at the said terminal (13), a comparator (41) whereof one input is connected to the output of the memory (25) and the other input is connected to the output of the said validation unit (40), the means for verification of the establishing of contact comprising the said validation unit (40), and the means for replacing the said code value comprise a buffer memory (34) connected between the output of a code generator (33) and the input of the said memory (35), a central unit (32) being arranged to organise the exchanges between these various elements, and that, in the second apparatus (20), the means for replacing the said code value comprise a validation unit (63) whose input is connected to the terminal (23), and whereof a first output is connected to the input of the said memory (64), and a second output is connected to an input of a control unit (65).

## Patentansprüche

1. Codierverfahren für die Identifizierung von Geräten (10, 20) für die Fernübertragung, bei welchem ein erster Codewert in Speichern (15, 25 und 35, 64) gespeichert wird, welche in wenigstens zwei Übertragungsgeräten vorgesehen sind, die dazu bestimmt sind, miteinander über Funk in Verbindung zu treten, wobei die Verbindung zwischen den Geräten nur freigegeben wird, wenn die Identität der genannten ersten Codewerte nach ihrem Austausch über Funk verifiziert wurde durch Verifiziermittel (16 ; 41), die in wenigstens einem der Geräte (10) zu diesem Zweck vorgesehen sind, dadurch gekennzeichnet, daß die genannten ersten Codewerte, welche in den genannten Speichern enthalten sind, periodisch ersetzt werden durch einen zweiten Codewert, nachdem ein elektrischer Kontakt (13, 23) zwischen den Schaltkreisen der genannten Geräte hergestellt wurde.

2. Vorrichtung zur Durchführung des Verfahrens nach Anspruch 1, vom Typ, welcher zwei Geräte (10, 20) betrifft, die so ausgelegt sind, daß sie miteinander über Funk in Verbindung treten können, wobei jedes dieser zwei Geräte einen Speicher (15, 25 ; 35, 64) aufweist, worin ein erster Codewert gespeichert ist, und wobei wenigstens eines der zwei Geräte Mittel (16 ; 41) zum Verifizieren der Identität der genannten Codewerte umfaßt, um die Verbindung zwischen den zwei Geräten zuzulassen oder nicht, dadurch gekennzeichnet, daß Mittel (13, 23) vorgesehen sind, um einen elektrischen Kontakt zwischen den zwei Geräten herzustellen, Mittel (16 ; 40) zum Verifizieren, daß der genannte Kontakt hergestellt ist, und in wenigstens einem der genannten Geräte Mittel (14 ; 33, 34) vorgesehen sind, um in den genannten Speichern der zwei Geräte periodisch den ersten Codewert durch einen zweiten Codewert zu ersetzen.

3. Vorrichtung nach Anspruch 2, dadurch gekennzeichnet, daß sie ferner Mittel umfaßt, um den zweiten Codewert durch zufällige Umsetzung des ersten Codewertes herzustellen.

4. Vorrichtung nach Anspruch 2, dadurch gekennzeichnet, daß die Ersetzungsmittel einen Zufallscode-Generator (14 ; 33) umfassen, der zum Liefern des zweiten Codewertes ausgebildet ist.

5. Vorrichtung nach Anspruch 2, bei welcher die zwei Geräte dazu bestimmt sind, periodisch ineinander gesteckt zu werden, um Akkumulatoren aufzuladen, welche in einem der Geräte enthalten sind, dadurch gekennzeichnet, daß die Mittel zur Herstellung des elektrischen Kontaktes wenigstens zwei Stifte (13, 23) umfassen, welche bei dem genannten Wiederaufladen ineinander steckbar sind.

6. Vorrichtung nach Anspruch 2, dadurch gekennzeichnet, daß die Mittel zur Herstellung des elektrischen Kontaktes in einer Multiplexierung der Codeaustauschsignale und der Gleichstrom-Aufladesignale für die Akkumulatoren bestehen.

7. Vorrichtung nach Anspruch 2, dadurch gekennzeichnet, daß in dem ersten Gerät (10) die Verifiziermittel eine Freigabeeinheit (40) für die Freigabe des an dem genannten Stift (13) empfangenen Codes, einen Komparator (41), wovon ein Eingang mit dem Ausgang des Speichers (25) verbunden ist und der andere Eingang an den Ausgang der genannten Freigabeeinheit (40) angeschlossen ist, wobei die Verifiziermittel für die Herstellung des Kontaktes die genannte Freigabeeinheit (40) enthalten, und Mittel umfassen, um den genannten Codewert zu ersetzen, mit einem Pufferspeicher (34) welcher zwischen den Ausgang eines Codegenerators (33) und den Eingang des genannten Speichers (35) geschaltet ist, wobei eine Zentraleinheit (32) geeignet ausgelegt ist, um den Austausch zwischen diesen verschiedenen Elementen zu organisieren, und daß in dem zweiten Gerät (20) die Mittel zum Ersetzen des genannten Codewertes eine Freigabeeinheit (63) umfassen, deren Eingang mit dem Stift (23) verbunden ist und wovon ein erster Ausgang mit dem Eingang des genannten Speichers (64) und ein zweiter Ausgang mit dem Eingang einer Steuereinheit (65) verbunden ist.

Fig.1

Fig.2

Fig.3